# EUROPEAN PATENT SPECIFICATION

(11) **EP 1 890 912 B1**
(45) Date of publication and mention of the grant of the patent: **31.03.2010**
(21) Application number: 06784537.0
(22) Date of filing: 02.06.2006
(51) Int. Cl.: B60R 11/02

(54) **PORTABLE DEVICE INTERFACING**
KOPPELN VON TRAGBAREN GERÄTEN
INTERFAÇAGE DE DISPOSITIFS PORTATIFS

(30) Priority: 03.06.2005 US 145168
(43) Date of publication of application: 27.02.2008
(73) Proprietor: BOSE CORPORATION, Framingham, Massachusetts 01701-9168 (US)
(72) Inventor: HOWARD, Damian, Winchester, MA 01890 (US); BLY, Patrick, M., Amesbury, Massachusetts 01913 (US); HAY, Scott, C., Groveland, Massachusetts 01834 (US); LEE, Bruce, Clinton, Massachusetts 01510 (US); WALSH, Daniel, S., Wakefield, MA 01880 (US); YOSHIOKA, Kenneth, S., Sutton, MA 01590 (US)
(74) Representative: Brunner, Michael John
(86) International application number: PCT/US2006/021352
(87) International publication number: WO 2006/132937

(56) References cited:
- EP-A2- 0 552 939
- EP-A2- 0 870 648
- WO-A-00/38951
- WO-A-02/094614
- DE-A1- 10 321 837
- DE-U1-202004 011 331
- US-A- 5 483 517
- US-A- 5 554 919
- US-A- 5 808 373
- US-A- 5 949 218
- US-A1- 2002 147 037
- US-A1- 2002 154 766
- US-A1- 2003 128 504
- US-A1- 2004 224 638

## Description

### BACKGROUND

This description relates to portable device interfacing.

Digital portable media players, for example, Apple iPod, Creative Zen, and Cowon iAudio X5 can store large volumes of files, play music, display images and perform film clips using audio compression and video compression formats such as MP3, WMA, OGG, FLAC, MPEG-4, AA, ASF, MP4, AAC, JPEG, BMP, GIF, TIFF, PSD and PNG.

Some portable media players can be interfaced with audio or video systems in automobiles, for example, by coupling the analog audio output from a line-out or headphone-out jack to the vehicle media system (e.g., using a radio transmitter) or by connecting player's data port to the vehicle media system.

In another coupling arrangement, a cassette adapter is plugged into the portable device and inserted into a cassette deck in the vehicle, which picks up music from the player through the playback heads in the cassette deck.

Alternatively, a mini (3.5mm) stereo headphone jack-to-stereo RCA cable or mini stereo-to-mini stereo cable can be connected between the line-out or headphone-out of the player and an auxiliary input of the vehicle media system, or in the absence of an auxiliary input, to a CD changer port.

Using a data port of the player as an interface to the vehicle media system may be done using a conventional Universal Serial Bus (USB) 2.0 or an IEEE 1394 FireWire 400 cable, or for some players, such as the Apple iPod, a device specific adapter cable. Connecting the portable device using a USB or FireWire cable allows the portable device to be controlled by a CD interface or a head unit in the vehicle media system equipped with the drivers to support the USB or FireWire connection.

Microsoft's PlaysForSure standard attempts to assure that a file compatible with the standard will be playable on a standard-compatible player without requiring multiple device-specific drivers.

Some vehicle media systems include data port portable device adapters that simulate CD changer functions, allowing users to move between and view track numbers in playlists and to skip between tracks using "Up" and "Down" arrows or play the contents of the portable device in "Random" mode.

Video players, such as Cowon iAudio X5, may be connected to a vehicle media system connecting a composite video and audio line out to a respective pair of connectors in the vehicle media system.

US 2003/0128504 Al discloses apparatus comprising a frame configured to receive a portable media player, the frame comprising connection elements configured to provide electrical connection between the portable media player and a vehicle media system when the portable media player is received in the frame, and a guide to align the portable media player with the connection elements when the portable media player is being received in the frame.

### SUMMARY

According to the present invention is **characterised in that** at least one user control of the portable media player is inaccessible to the user when the portable media player is received in the frame, and the frame is configured to receive a cup in which the portable media player is held in use.

The frame may also comprise a housing having walls to envelop the portable media player when the portable media player is received in the frame and an opening in the walls to permit the portable media player to be inserted into and removed from the frame. The frame may also comprise a locking mechanism to hold the portable media player in the frame and a user-operable release mechanism to release the portable media player from being held in the frame. The connection elements can be configured to conform to a communication bus of the vehicle. The bus may comprise a multimedia fiber-optic point-to-point network, e.g., a MOST bus, a 2-wire interface, e.g., a CAN bus or any other bus known in the automotive field. The guide may comprise at least one of wheels, rollers, rails, and tracks and may be motorized when the portable media player is being received. The guide can also be motorized to eject the portable media player. A biasing device may bias the guide against the portable media player.

In one embodiment, a portable case to hold the portable media player and to engage the guides as the portable media player may be received in the frame. The frame may be configured to accommodate at least two different portable media players having different sizes. The case may be configured to accommodate at least two different portable media players having different sizes and can also accommodate the guide of the frame. The case may have an interior compartment that is configured to hold a particular type of portable media player, and may have internal ribs to hold a portable media player that is smaller than the interior space of the case. The case may further comprise two portions configured to cooperate to house the portable media device ,the two portions being connected by a hinge. A receptacle in the case may mate with a corresponding pin of the frame to align the case with the frame. The hinge acts as a key to prevent improper insertion of the portable device. The case further comprises: an opening for access by a user to a control of the portable media player. The case further comprises an opening for viewing a display on the portable media player. The frame is configured to be mounted in a .5DIN, 1DIN, 1.5DIN, 2DIN, or 2.5DIN option bay of a vehicle. The guide engages side surfaces of the portable media player. The guide comprises a tray. The frame is configured to receive a cup in which the portable media player is held. The frame comprises a cup holder of the vehicle. The apparatus includes a cup in which the portable media player is held. The connector elements include connectors on the cup. The connectors are selectively hidden or withdrawn from a bottom surface of the cup, for example, by twisting one portion of the cup relative to another portion of the cup.

The cup may have an interior space configured to receive a portable media player and a coupler to provide electrical connection between the player and a media system. In some implementations, the cup is sized to be supported in a cup holder of a vehicle.

The frame may include connection elements configured to provide electrical connection between a portable media player and a vehicle media system when the portable media player is received in the frame, the frame being integrated with an element of interior finish work of a vehicle.

The element of interior finish work may comprise at least one of an armrest, a sun visor, a rearview mirror, a dashboard, a seat, a door, a console, a glove compartment, a headrest, and a head unit of a vehicle media system. The portable media player comprises a music or video player, an MP3 player or an Apple iPod.

The case for a portable media player may have an interior space configured to accommodate different configurations of portable media players, and an exterior configured to fit within a receptacle of a vehicle and to couple electronically through the receptacle to a media system of the vehicle.

Implementations may include the portable media player and the receptacle.

The performance of the material may be controlled using a head unit of the media system of the vehicle or using controls on the portable device.

A head unit of a media system of a vehicle preferably includes elements configured to electronically couple to and control a portable media player held temporarily in a receptacle in an element of an interior finish of the vehicle. In some implementations, the head unit is configured to detect a type of the portable media player.

A charging circuit for a portable media player to be mounted temporarily in a vehicle may include a switch electrically connected to a power supply; a resistance between the switch and a portable device; and a comparator having an output which controls the switch; wherein the comparator measures a voltage exceeding a set threshold across the resistance and the comparator controls the switch to allow the power supply to charge the portable device.

A second comparator may have an output which controls the switch; wherein the second comparator measures a voltage below a set threshold on the main vehicle battery and the second comparator disables the switch allowing the power supply to charge the portable device.

Preferably, when a portable device is temporarily coupled to a media system of a vehicle and an electrical system of the vehicle is in an off state, the level of drain by the portable device from a power source of the vehicle is reduced by sending a command to the portable device to cause the portable device to enter a sleep state.

Implementations may include one or more of the following features. The portable device responds to a command set that does not include a command to power off. The portable device comprises a music player. The portable device comprises an MP3 player. The portable device comprises an Apple iPod. The command is sent when the electrical system of the vehicle switches from an on state to an off state. The command is sent when the vehicle is in an off state and the portable device is first coupled to the media system.

In a vehicle electronic system to which a portable, battery-powered media device has been temporarily coupled, charging of the portable device from a power source of the vehicle based on information derived from at least one of the media device, the vehicle electronic system, and the power source may be provided.

Such information may indicate a charge level of a battery of the portable device, inferred information about a charge state of a battery of the portable device that is based on a level of charging current being applied to the battery of the portable device, presence of the portable device based on a signal from a grounding pin or mechanical switch associated with a frame into which the portable device can be temporarily inserted, the state of an ignition key of a vehicle, or the state of the power source of the vehicle. The charging may be based on a charging time window determined by a timer.

Other features, objects, and advantages of the invention will be apparent from the description and drawings, and from the claims.

### DESCRIPTION

Fig. 1 shows a vehicle interior.
Fig. 2 shows a media playing system.
Fig. 3 shows a center console of a vehicle.
Figs. 4A-G shows a media playing system called a gobbler.
Figs. 5A-E show guide systems.
Figs. 6A-H show a frame for a media player.
Fig. 7 shows a media player adapter.
Fig. 8 shows a slot for receiving a media player.
Figs. 9A-C show a holder.
Figs. 10A-C show a player and a glove box.
Figs. 11A-B show a sun visor and a player.
Fig. 12 shows a storage bin in a door and a portable device.
Fig. 13 shows a storage bin of a center armrest and a portable device.
Fig. 14 is a schematic diagram.
Fig. 15 is a block diagram.

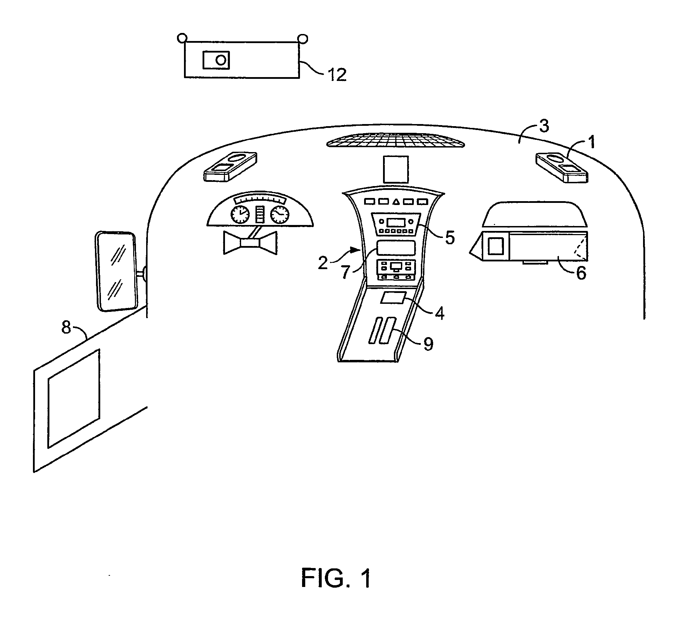

In Fig. 1, a portable device 1 can be integrated with a vehicle media system 2 in a variety of locations each offering one or more advantages such as ease of use, line of sight visibility, or avoiding clutter in the vehicle. By portable device we mean portable media players and any other kind of portable electronic device that performs functions that could be integrated with electronic devices that are part of the vehicle. Such functions could relate, for example, to GPS systems, or to running of software applications, or to internal vehicle environmental controls or other functions. By integrating we mean temporarily coupling the portable device mechanically or electronically or both to the vehicle, its media system, and its interior surfaces or elements; when the portable device has been integrated it may then be de-integrated by decoupling it. In other words, the portable device can be used in both a portable mode and in a mode in which it has been temporarily integrated into the vehicle in a way that mechanically or electronically associates it with interior elements of the vehicle and permits electronic coupling of content signals and control signals between the device and the vehicle.

For simplicity of presentation, figure 1 shows a variety of different locations for temporarily integrating the portable device. In a given vehicle, only one or a few of the locations might actually be configured for such temporary integration.

The portable device may be integrated in the dashboard 3. Such a location reduces the amount of time and degree of disruption associated with the driver diverting his eyes to view the information on a head unit 5 or on the portable device and to manipulate the controls on the head unit or on the portable device.

The portable device may be integrated in the center console 4 in front of the shifter 9, giving easy access to both the driver and the passenger.

Integrating the portable device in the glove box 6 would avoid cluttering other exposed, unobstructed surfaces and spaces in the vehicle while still allowing access to the display and controls of the portable device.

Integrating the portable device in the center console 7 would avoid cluttering other exposed, unobstructed surfaces and spaces in the vehicle.

Another location for integrating the portable device would be in any of the doors 8, which would avoid cluttering the center console while still allowing access to the display and controls of the portable device.

The portable device could be integrated into the sun visor 12 which is easily accessible while somewhat out of the way. The sun visor may be flipped down to view the portable device and flipped up to remove it from view.

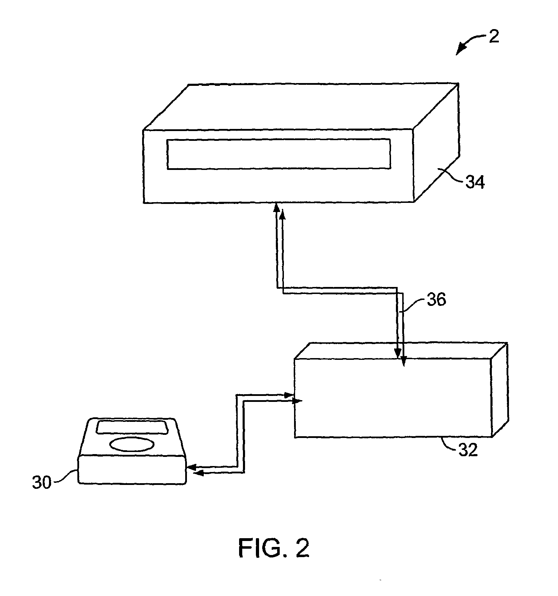

As shown in Fig. 2, a typical way to integrate the player electronically into a vehicle media system 2 is by connecting the portable device 30 to an amplifier 32 that is part of the media system. The amplifier 32 may be electrically connected to the head unit 34 by a bus 36. In some examples, the bus 36 is a Media Oriented Systems Transport (MOST) bus. The MOST bus is a multimedia fiber-optic point-to-point network implemented in a ring, star or daisy-chain topology over plastic optical fibers. The MOST bus specifications define a Physical (Electrical and Optical parameters) Layer as well as an Application Layer, a Network Layer, and Medium Access Control. The MOST bus provides an optical solution for automotive media networks such as video and audio. In some embodiments, other buses such as a Controller Area Network bus (CAN) is a Balanced (differential) 2-wire interface running over either a Shielded Twisted Pair, Unshielded Twisted Pair, or Ribbon cable where each node uses a Male 9-pin D connector.

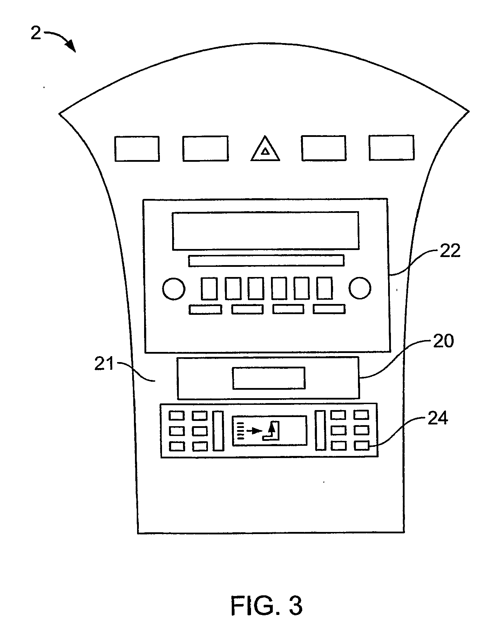

In Fig. 3, a frame 20, for receiving the portable device, is integrated into the vehicle media system by mounting the frame in a slot 21 in the center console 2 and electronically connecting the frame to the head unit 22. In some embodiments, the slot is a DIN slot. DIN slots come in different DIN-sizes such as 1/2 Din,1-DIN, 2-DIN AND 2.5-DIN sizes. The basic dimensions of a DIN slot are 7" x 2" x 10". In some embodiments, the frame 20 is below the head unit 22 and above the equalizer 24. In other embodiments, the frame 20 may be physically integrated into the head unit 22.

In some embodiment, all of the functional commands available to the user of the portable device through interface controls of the portable device can be controlled instead through the head unit 22, and all of the portable device messages that are visible to the user through the interface of the portable device can be displayed on a display incorporated into the head unit 22. For example in an Apple iPod the commands and messages can include: Customize main menu, Create multiple On-the-Go playlists, Adjust audiobook playback speed, Clicker playback through headphones, Rate songs, Shuffle songs or albums, Repeat one or all, Sound Check on or off, Equalizer settings, Backlight timer, Display contrast, Alarms on, off or silent, Sleep timer, Date and time, Display time in menu bar, Contacts sort and display by first or last names, Clicker on or off. In some embodiments, the head unit incorporates circuitry or software that can encode, send, receive, and decode the commands and messages of the portable device. In some embodiments, the commands and messages are displayed at the head unit.

When non-Apple devices are used, the hardware and software may comply with the PlaysForSure standard, for example, for purposes of integrating the portable device into the vehicle media system. The PlaysForSure drivers may be located anywhere in the system including the amplifier and the head unit.

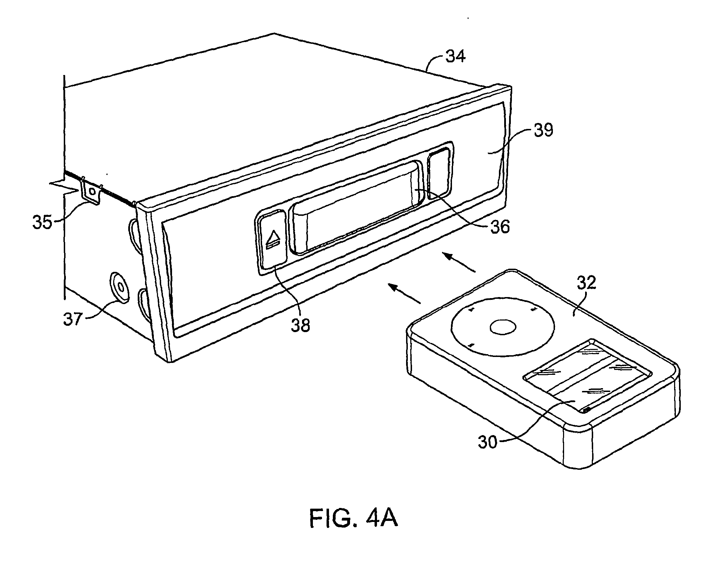

In Fig. 4A, a frame to integrate the portable device is configured as a so-called gobbler unit 34. The gobbler unit 34 receives a portable device 30 through an opening 36 into a chamber 31 and connects the portable device electronically to the vehicle media system. The gobbler unit 34 also has an ejection button 38. The unit 34 includes a face plate 39 and screw mounting holes 35, 37 for mounting and mechanically integrating the gobbler unit at one or more of the locations described earlier inside the vehicle. When installed in the vehicle the face plate may be flush with other interior trim of the vehicle or may project slightly. The size and shape of the unit 34 may be arranged to fit within a DIN slot. Electrical connectors or cables, not shown, are used to integrate the unit 34 electronically into the vehicle's media system.

The chamber of the gobbler unit may be sized and shaped so that the entire portable device (or a significant portion of it) will fit within the chamber leaving no part, or only one exposed face, or an even larger portion of the device exposed to the user. Depending on the mounting, the user will then be able to see or not see displayed information on the case of the device and to manipulate or not manipulate controls of the device.

In some embodiments, the interior chamber of the gobbler unit 34 is adapted to receive only one type and size or configuration of portable device 30, for example, an Apple iPod. The size and shape of the chamber may be exactly matched to that one type and size or configuration of device so that when the device is inserted into the opening 36 and pushed into place, no additional guides are required to assure correct alignment with the gobbler unit 34. In some examples, the case of the device may also be covered with a protective case (and the internal chamber sized accordingly) to protect the finish on the device from the guide mechanisms in the gobbler unit 34 or for other reasons such as aesthetics or branding.

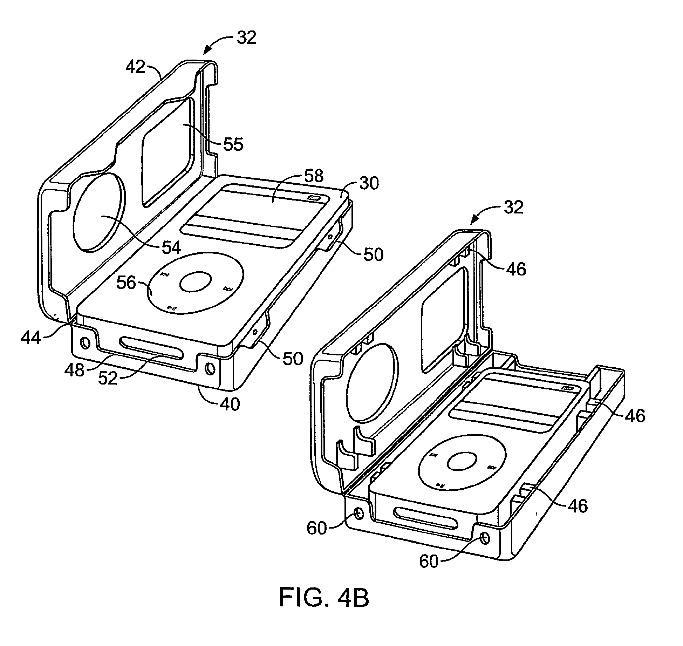

As shown in Fig. 4B, such a case 32 may be include a base 40, a face plate 42, a hinge 44 and a locking mechanism 50. The base 40 and face plate 42 may be configured to accept different sized portable devices 30. In some embodiments, the interior dimensions of the base 40 and face plate 42 match the dimensions of the portable device 30. In other embodiments, the case may be a sleeve and the portable device slides snugly into one end of the sleeve.

The case 32 has an opening 48 that exposes an electronic connector 52 of the portable device 30. The opening 48 exposes the connector 52 to a connector (not shown) in the gobbler unit 34 so that when the device is inserted into the gobbler unit, the connector 52 mates with the gobbler unit connector and places the portable device 30 in communication with the vehicle media system enabling one or more of media signals, commands, and power, to be coupled between the media system of the vehicle and the portable device.

The face plate 42 has two openings 54, 55 that expose the controls 56 and display 58 of the portable device (in this case an iPod) to the user. The number and placement of the openings 54 are determined by the model of portable device 30 that the case 32 is configured to house, such that the controls and displays of the selected portable device 30 are accessible.

In some embodiments, the hinge 44 may be a "living hinge" which is molded as one unit with base 40 and face plate 42. In other embodiments, the hinge 44 may be constructed using a standard hinge pin configuration. In either case, the base 40 and the face plate 42 are rotatably joined to each other. The hinge 44 may act as a key to assist in correctly aligning the case 32 with the gobbler unit 34. For this purpose, the front opening of the gobbler unit may have a notch on only one side of the opening that accepts the hinge as a keyed element and does not accept the hinge as a keyed element on the other side.

In addition to the hinge 44, the case 32 may also contain a receiver 60 (two holes on either side of the connector end in the example shown in the figure) to aid in aligning the portable device 30 with a connector in the gobbler unit 34. The receiver 60 would line up with guide pins mounted inside the chamber of the gobbler unit 34 so that when the portable device and case are inserted into the chamber, the pins mate with the holes and the case is guided into alignment and position for coupling the connector 52 with the gobbler connector.

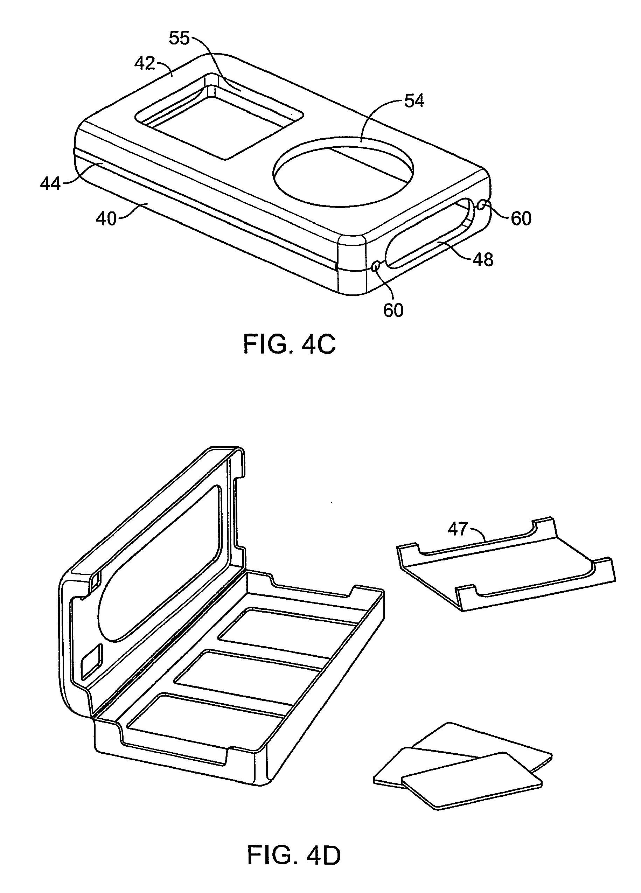

In Fig. 4C, a portable device 30 is shown in the case 32. In some embodiments, the opening and chamber of the gobbler unit 34 may be constructed to receive a standard size structure; then a standard-sized case (such as the one shown in figure 4C) may be used to compensate for the different dimensions of different actual portable devices. In these embodiments, a device specific case 32 having the standard exterior dimensions and having interior dimensions or elements adapted to fit the specific portable device is used to hold and align the portable device with the gobbler unit 34.

In some embodiments, a case may be used to allow for a smaller portable device to be used with the gobbler unit. In Fig. 4B, the case 32 includes ribs 46 to hold the portable device 30 in the required orientation to mate with the gobbler unit. The location and size of the ribs 46 are selected for a particular smaller portable device to be used in the gobbler unit 34. This allows for a one-size gobbler unit 34 to be placed in the vehicle and for many device specific cases 32 having the standard external dimensions for a variety of portable devices to be manufactured. A given case may also have interior elements like the ribs that are adjustable or removable so that a single standard sized case would accommodate more than one different type of portable device.

In Fig. 4D, cases having the standard external dimensions may be designed to receive an insert 47 designed to hold a specific portable device within the standard case. A variety of inserts may be created for different models of portable devices.

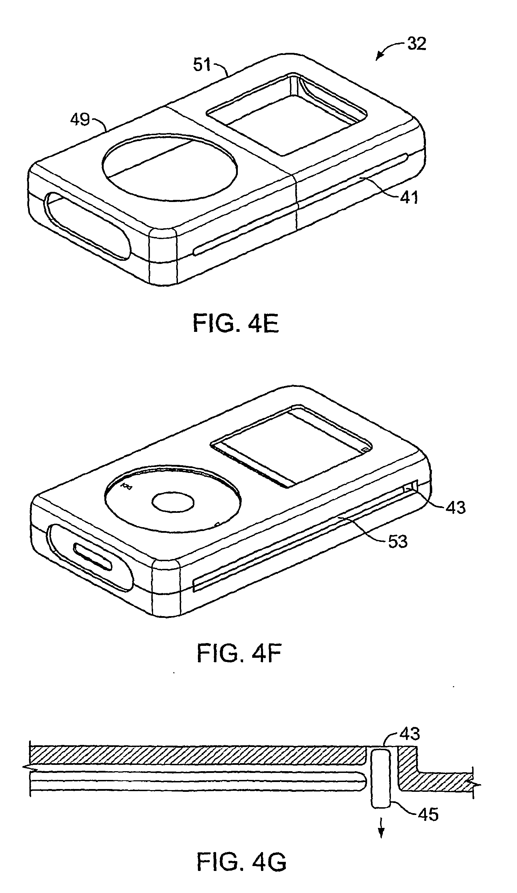

In Fig. 4E, the case has a lower portion 49 which slides snugly over a portable device and the lower portion is removably attached to an upper portion 51. In some embodiments, the case may have a rail 41 to act as a key to assist in correctly aligning the case 32 with the gobbler unit. For this purpose, the front opening of the gobbler unit may have a notch on only one side of the opening that accepts the hinge as a keyed element and does not accept the hinge as a keyed element on the other side. In some embodiments, the case may be made of a material which provides for a pliable surface to further engage the guides in the gobbler.

In Fig. 4F, the case has a slot 53 incorporated into its side for accepting a rail provided by the gobbler unit to assist in correctly aligning the case 32 with the gobbler unit 34. In some embodiments, as in Fig. 4G, an opening or recess 43 may be provided in the case to receive a pin 45 to hold the portable device in place. When the portable device is ejected from the gobbler unit, the pin is removed from the opening or recess.

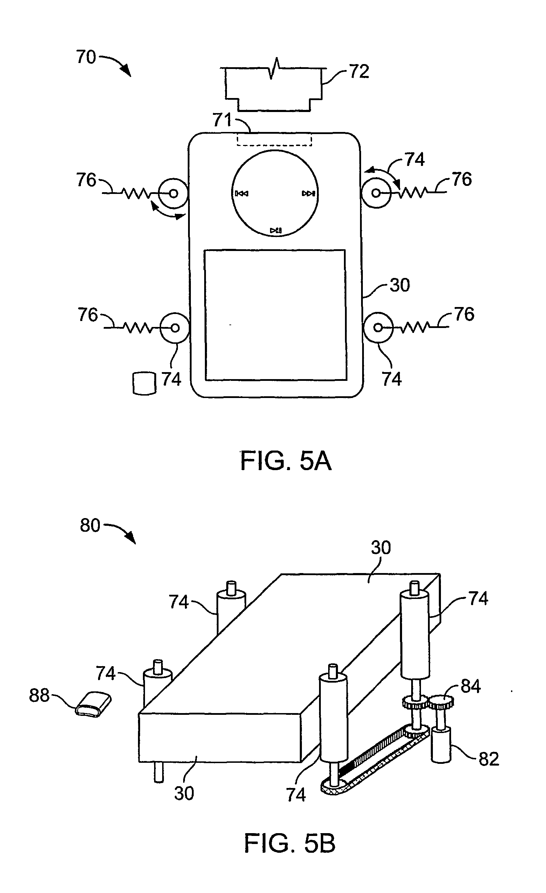

In Fig. 5A, a guide system 70 is incorporated in the gobbler unit 34. In some embodiments, the guide system includes guides 74 that are used to align the connector 71 of portable device 30 with connector 72. In these embodiments, the guides 74 contact the side of the portable device. The guides may be a slide, a tray, rollers, or wheels, for example. In some embodiments, a biasing system 76, such as springs, may be connected to the guides to keep the portable device correctly aligned and firmly held in place. In the embodiments which incorporate a slide, the portable device slides between the two slides until it mates with the connector 72. In the roller or wheel embodiments, the portable device moves down the path while the guides roll along the surface of the portable device 30. In the embodiments which incorporate a tray, the portable device is held on the tray which correctly aligns the portable device with the gobbler unit connector.

In some embodiments, the biasing system 76 may be adjustable to permit portable devices 30 of different sizes to be used with the gobbler unit 34. The biasing system 76 expands or contracts to accept the portable device and maintain alignment with connector 72.

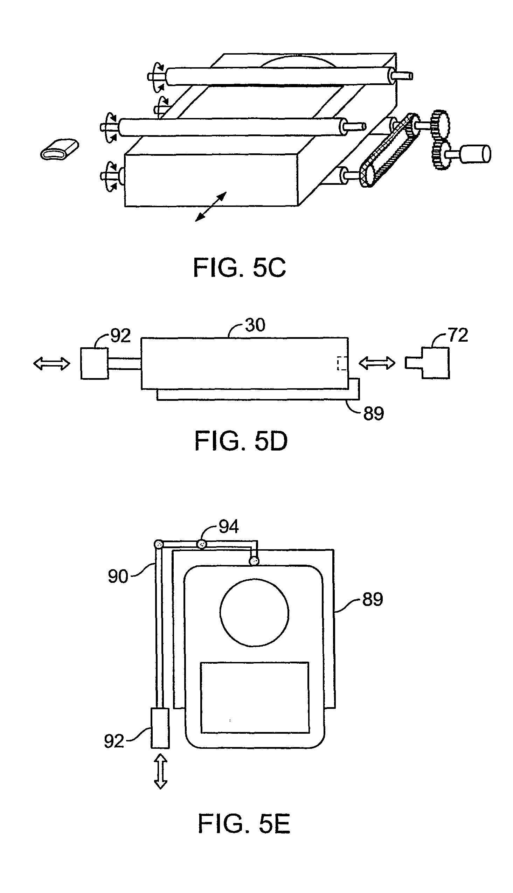

In Fig. 5B, a motorized guide system 80 is located within the gobbler unit and is used to insert and eject a portable device from the gobbler unit. In some of the motorized embodiments, the guides 74 are rotated by a motor 82 using a gear 84 and belt 86 mechanism that rotates two of the guides 74 to bring the portable device into contact with the gobbler unit connector. In other embodiments, the motor 82 may be connected directly to one of the guides 74 and to one of the other guides by a belt. The motor 82 is activated by the insertion of a portable device 30. Once activated, the motor 82 transports the portable device 30 until it is mated with the gobbler unit connector. In response to a signal from the eject button 88, the portable device 30 is disengaged from the gobbler connector by reversing the motor 82. In some embodiments, the motorized guide system engages the front and back of the portable device such as in Fig. 5C.

In Fig. 5D, a support tray 89 is used to guide the portable device 30 to the gobbler unit connector 72. Turning to Fig. 5E, an eject mechanism 90 is coupled to the support tray. Responsive to a force on the eject button 92, the eject mechanism 90 pivots about pivot point 94 and forces support tray 89 to disengage from the connector.

In either a motorized or non-motorized configuration, a push/lock feature may be incorporated. The push/lock feature locks the portable media device into the gobbler unit once it has been pushed to a certain point.

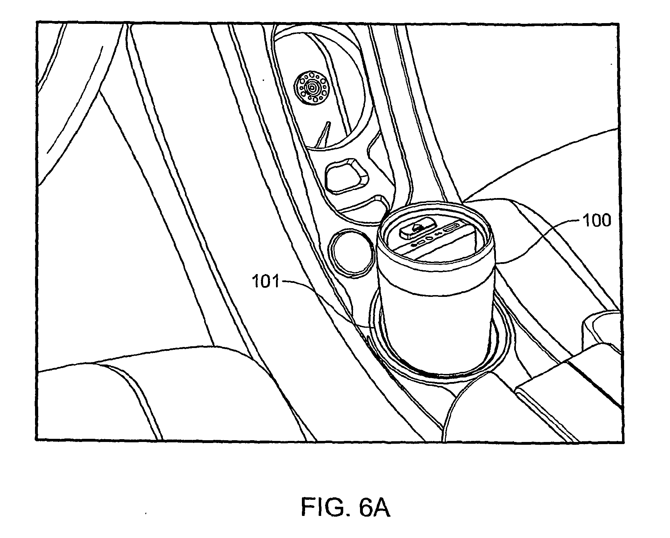

Other types of frames and cases for portable devices may be used. For example, in Fig. 6A, a can type case 100 containing the portable device is in communication with a vehicle media system when inserted into a cup holder frame 101 is adapted to receive the can type case. In some embodiments, the can type case 100 is adapted to fit within a standard vehicle cup holder that has been adapted to allow the portable device in the frame to communicate electronically with the vehicle media system. In some embodiments, the can type case may be a cup.

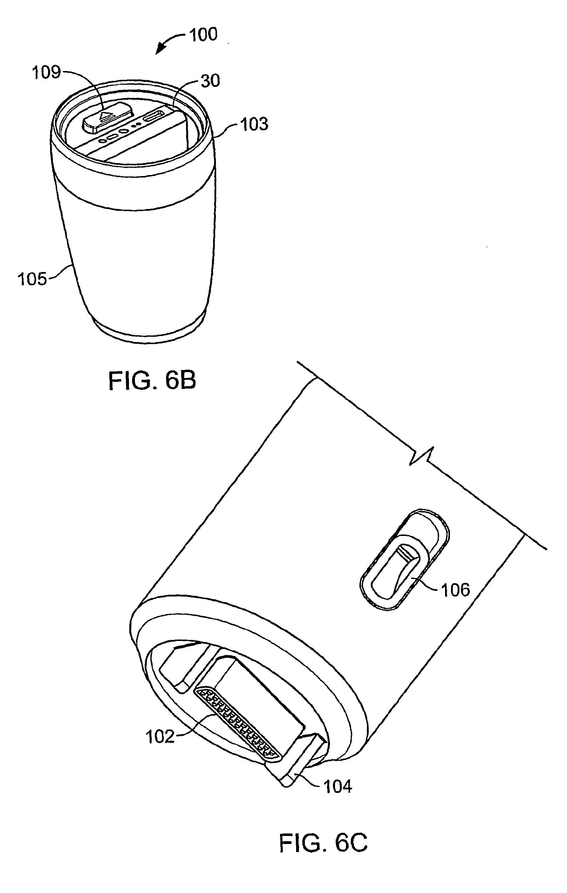

In Fig. 6B, the can type case 100 is adapted to receive the portable device 30 and hold it firmly. An eject mechanism 109 is incorporated to disengage the portable device from the can type frame.

In Fig. 6C, a slider 106 is used to deploy and retract a can connector 102 on the bottom of the can. The connector is shown in the deployed position. In some embodiments, tabs 104 are also deployed and retracted by the use of slider 106. The tabs can be used to protect the connector from being improperly inserted into the frame as well as to open a door (exposing a mating connector) in the frame for receiving the can. The retraction of the connector 102 allows the can to sit on a flat surface when not being used to couple to the media system. In some embodiments, the tabs may be used as guides to correctly align the connector with a matching connector in the frame into which the can is inserted for coupling to the vehicle media system. In some embodiments, the tabs are angled so that the can may be inserted into the frame in only one orientation.

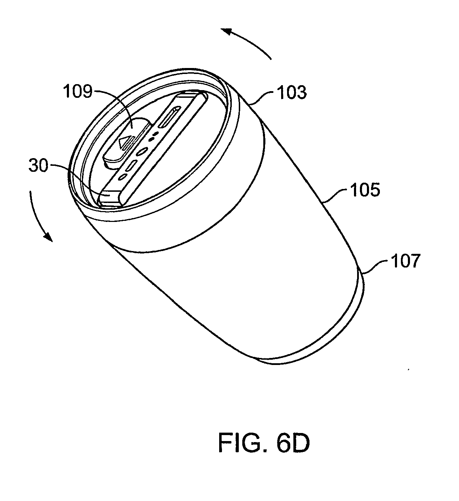

In Fig. 6D, the portable device may be secured in the can type case by rotating "lid" 103 in relationship to body 105. In some embodiments, the rotation of the lid deploys pins within the case and the pins mate with reciprocal guide receivers to secure the portable device and prevent the portable device from falling out of the case. In other embodiments, the rotation of the lid moves rubber arms within the case which contact the portable device and the pressure of the arms against the portable device prevents the portable device from falling out of the case. In some embodiments, the portable device is inserted into the case and pushed against a spring mechanism, which is located proximate the bottom of the case and provides a force opposed to the insertion, until the portable device is fully within the case and the portable device locks in place by being pushed by a second spring mechanism away from the rectangular opening so that the portable device is no longer aligned with the opening. In these embodiments, the portable device is ejected when the eject button 109 is depressed and the portable device is pushed back into alignment with the opening. In some embodiments, the portable device may be released by rotating "lid" 103 in relationship to body 105 in the opposite direction.

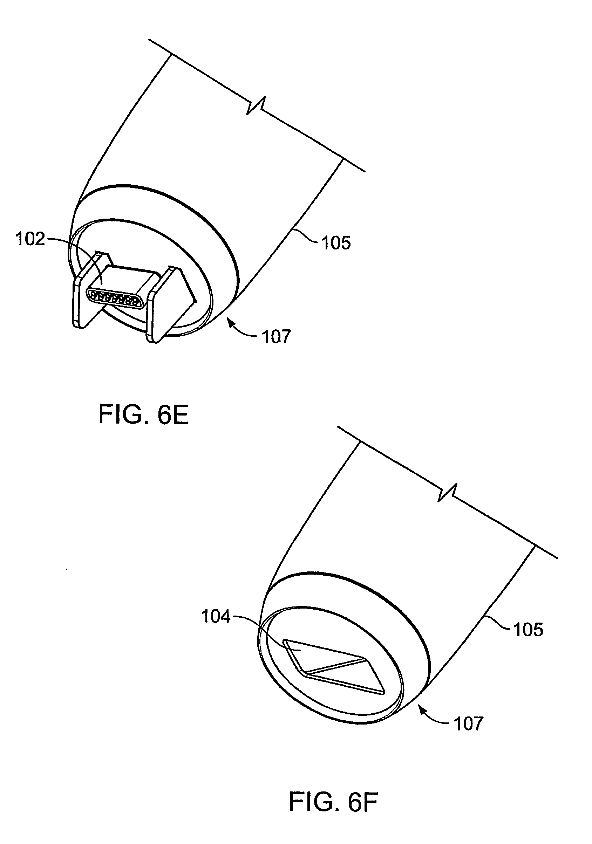

In Fig. 6E, the connector 102 is deployed by rotating the ring 103 in relationship to the body 105, exposing the connector for mating to a matching connector in the vehicle media system. In some embodiments, the connector is deployed using a platform inside of the case and connected to a circular track molded in the inside of the case and as the base ring is turned the platform rides down the track until the connector is deployed. When the base ring is turned in the opposite direction the connector is retracted. In some embodiments, the doors 104 are also retracted by the rotation of the frame ring 103. In other embodiments, the doors are configured to deploy into a position that is substantially perpendicular to the base of the can and act as guides to correctly align the connector with a matching connector in the frame of the vehicle media system. In other embodiments, pins may be exposed to act as guides.

In Fig. 6F, doors 104 slide open to expose the connector. In some embodiments, the doors are constructed with gears which communicate with teeth on the inside of the base ring and the doors slide open in response to the rotation of the ring 107.

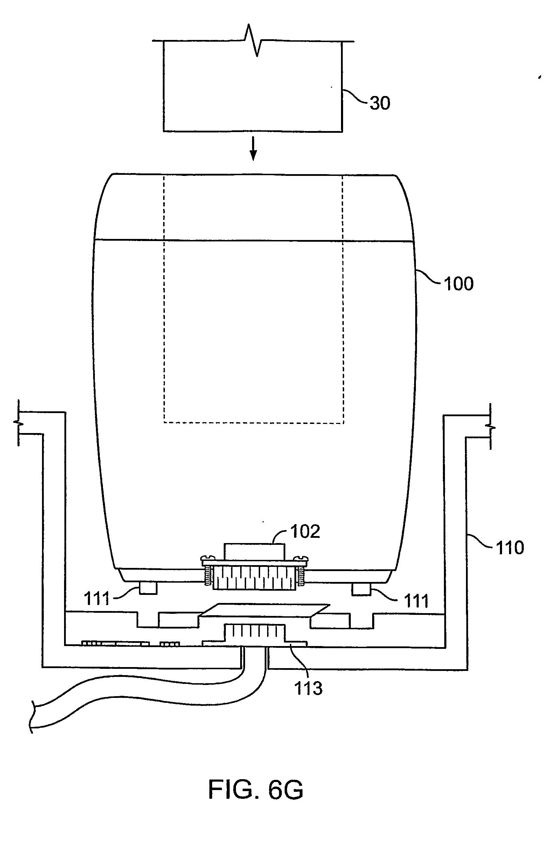

In Fig. 6G, the can case 100 is being inserted into the frame 110. The connector 102 is configured to mate with a specific portable device 30 in the can case 100 and to a frame connector 113 when the can case 100 is inserted into the frame 110. In some embodiments, guides 111 may be used to help align the connectors.

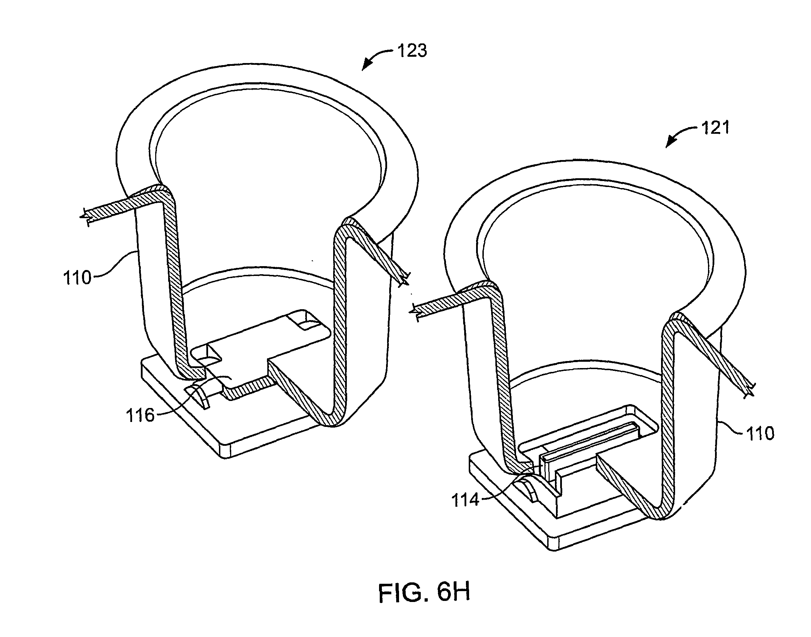

In Fig. 6H, a door 116 is shown covering the frame connector. In some embodiments, the frame 110 has an active state 121 and an inactive state 123. In the inactive state the door 116 closes over the connector 114 in order to protect the connector 114 from debris. In the active state the door 116 opens to expose the connector 114 so that the can connector 102 can be received by the connector 114. In some embodiments, the door 116 is mechanically engaged by the tabs on the can case and rotates to expose the connector 114.

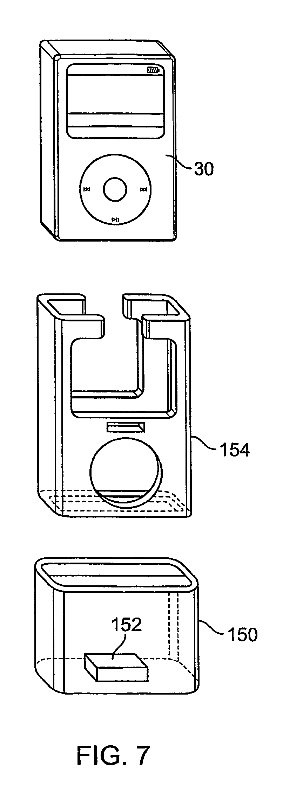

In Fig. 7, a vertically mounted adapter frame 150 receives a portable device 30 that mates with a connector 152 in the frame. In some embodiments, a sleeve 154 or a case may be used to accommodate different sized portable devices in the adapter. The adapter frame may be used in the center console or dashboard. One of the reasons for using an adapter is so that the portable device display may be viewed while driving. The frame 150 may be mounted in various locations within the vehicle interior in a vertical orientation as shown in the figure.

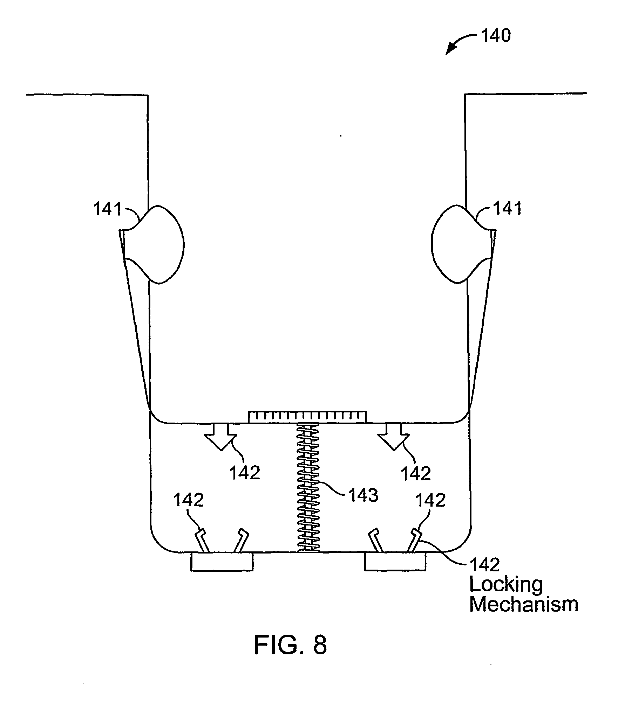

In Fig. 8, for vertical integration of a portable device, a slot 140 receives the portable device that is placed into the slot from above and held in place by the arms 141, spring 143, and locking mechanism 142. The arms move toward each other as the portable device is inserted while the spring provides an upward resistance. The locking mechanism closes when the portable device is fully inserted and is held closed by the force from the spring. The locking mechanism is released by pushing down on the portable device. Not shown is a connector that mates with the portable device to electronically integrate the portable device with the vehicle media system. The slot may be used in the doors, center console, or dashboard to recess the portable device into the surface of the vehicle internal finishes.

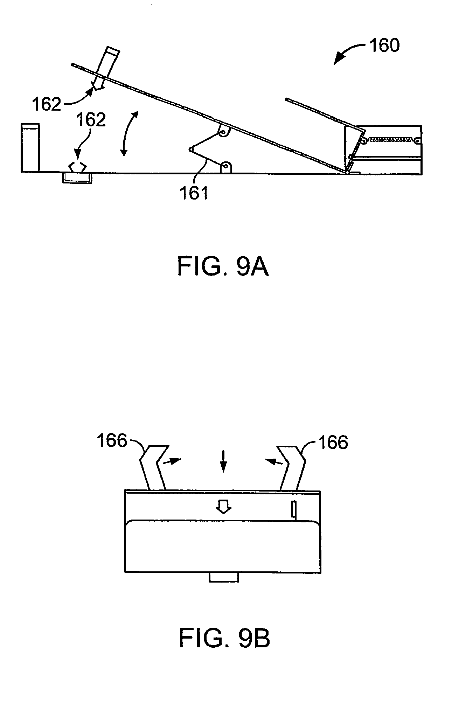

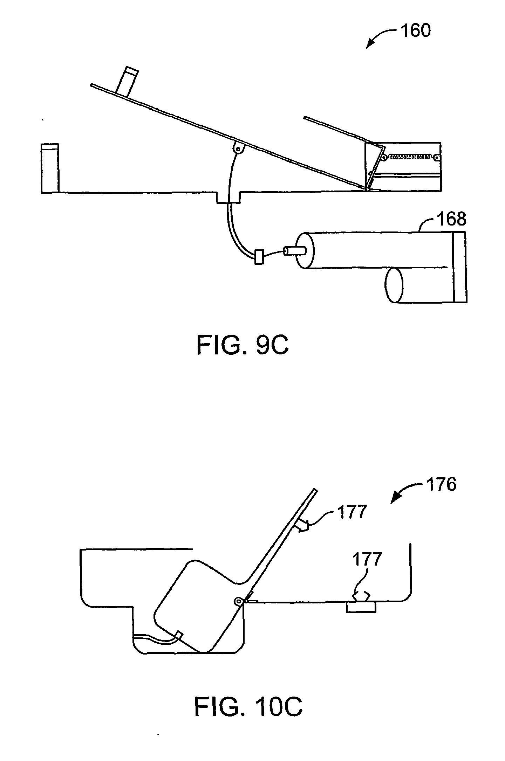

In Fig. 9A, a spring loaded horizontal holder frame 160 is held in an open position by a spring 161, waiting to receive a portable device. The portable device may be placed into the holder and then pushed down until the holder is locked down by locking mechanism 162. Turning to Fig. 9B, the portable device is securely held in place by arms 166. Not shown is a connector that mates with the portable device to integrate the portable device with the vehicle media system. The spring-loaded holder maybe used in the doors, center console, and dashboard, for example. The holder permits the portable device to recessed into the finished surface of interior of the vehicle. Turning to Fig. 9C, a cable drive mechanism 168 is used to deploy and retract the holder 160.

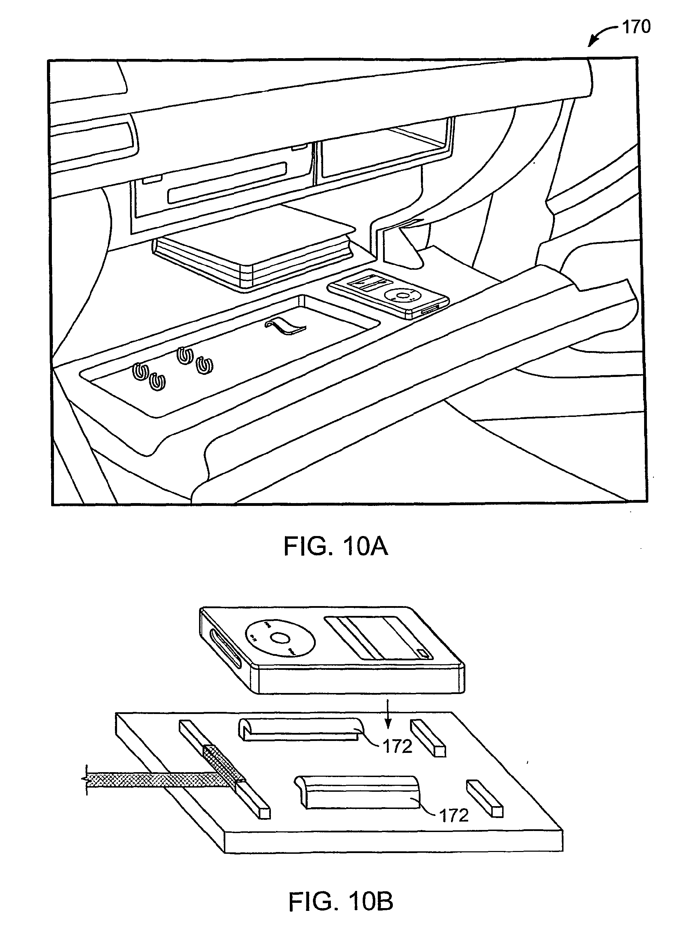

Fig. 10A is a portable device mounted in a glove box horizontal mounting device 170. In Fig. 10B, the portable device is snapped into the holder by use of snaps 172. Turning to Fig. 10C, the portable device is placed into a pop up mount 176 in the glove box. The portable device is then pressed down, causing the mount to rotate into and become locked in a horizontal position within the glove box. The locking mechanism 177 is a "push to close push to open latch.

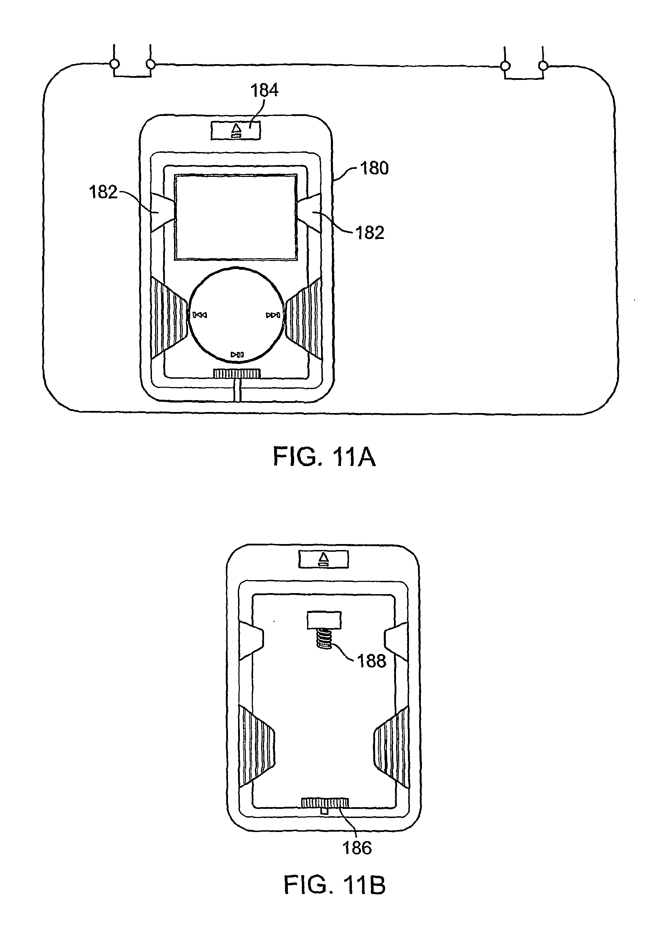

In Fig. 11A a sun visor frame 180 holds a portable device. in place using arms 182 and can be released by pressing the eject button 184. In Fig. 11B, the portable device is connected to the vehicle media system by a connector 186 and held in communication with the connector by spring 188.

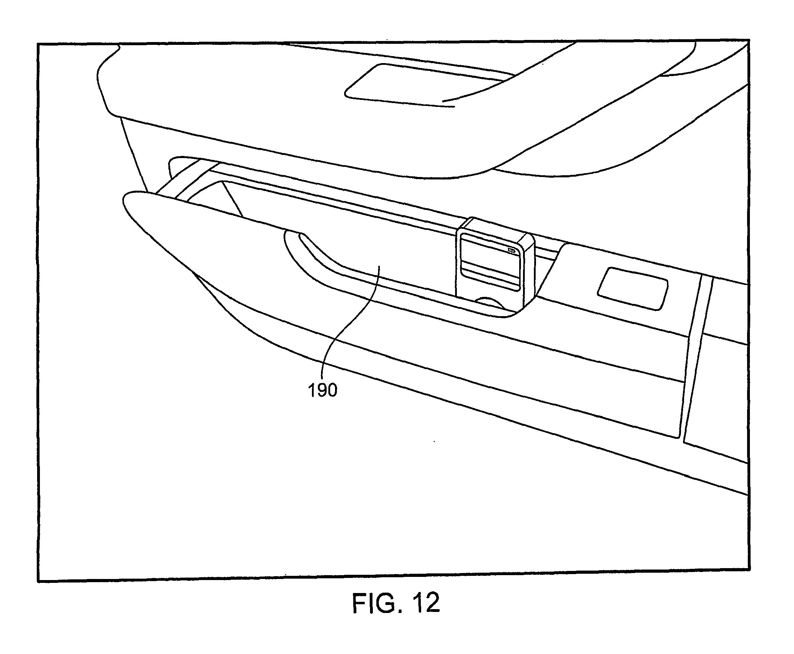

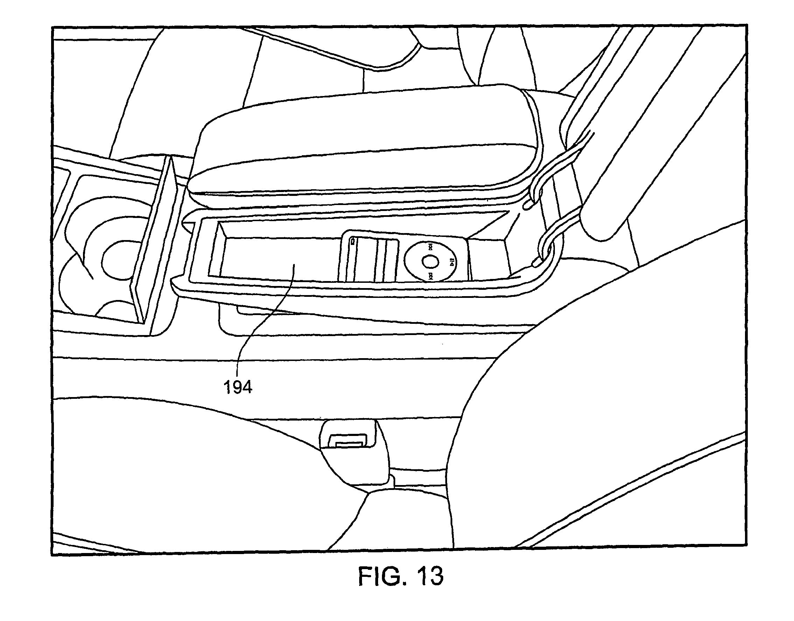

Portable devices may be held in frames mounted in the storage bin of a door 190 as in Fig. 12, or in a storage bin of a center armrest 194 as in Fig. 13.

A charging system may be incorporated in the vehicle media system to charge the portable device. The charging system is capable of charging both when the vehicle is running and when it is off. In order to prevent the complete discharge of a vehicle battery a switch is used to disable the charging system when the battery reaches a certain threshold.

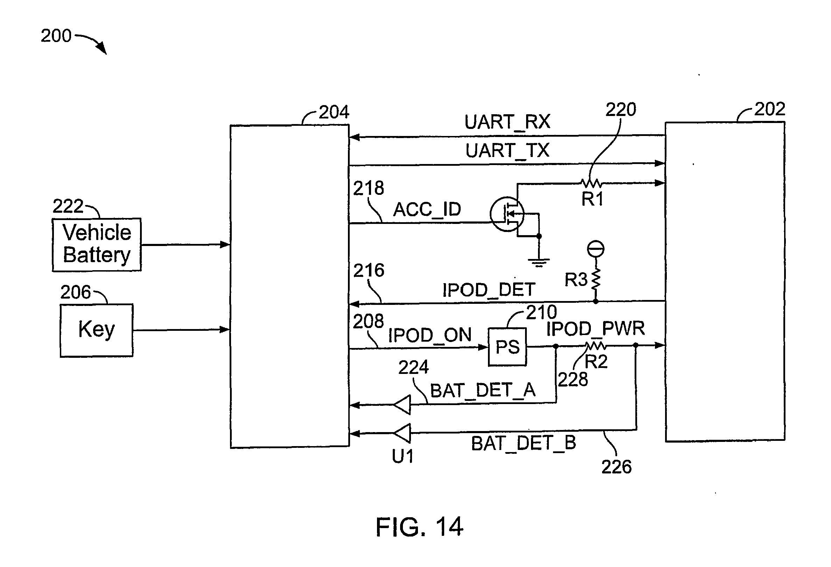

In Fig. 14, a software controlled charging apparatus 200 is used to charge a portable device 202. In some embodiments, the software may be physically located in the portable device case or can or frame. In other embodiments the software may be physically located in a system controller 204 within, say, the head unit.

A VIC is used as a system controller. In some embodiments, the VIC is a microprocessor. A vehicle key 206 position is used to determine whether the charging system is on. In some embodiments, the charging system is powered on if the vehicle key 206 is in accessory or ignition position. In other embodiments, the charging system is powered on using a power button.

The key could signal the turn on of the charging system using a grounded pin connection or a mechanical micro-switch. The transition is sensed by the microprocessor 204 either through an interrupt based software algorithm or polling based software algorithm or a combination of the two algorithms.

An IPOD_ON 208 signal turns on the power supply circuitry 210 that is used to supply power to charge the portable device 202. A recoverable fuse (poly-switch) not shown, can be inserted in series with the charging voltage output line connected to R2 228 to guard against connector shorts.
1. The normal charging sequence is the following when the key 206 is on (indicating vehicle battery is being charged): An IPOD_DET 216 signal is sensed as transitioning from "High" (High/Low state is device specific and opposite logic could be used) to "Low" or is "Low" upon system power up (indicating that the portable device is present and/or the battery of the portable device requires recharging).
2. The ACC_ID 218 signal line is made "High" thereby grounding resistor R1 220 (setting a desired operating mode of the portable device ).
3. The IPOD_ON 208 signal line is made "High" thereby turning on the charging power supply 210 to the portable device 202.
4. Normal communication between the VIC 204 (or microprocessor) and the portable device 202 continues via the UART_RX and UART_TX connections..
5. If communication fails, then it is suspected that a fault may have occurred. Repetitive testing is made. If communication continues to fail then the charging power supply to the portable device 202 is turned off to prevent potential failure mechanisms and drainage of the main vehicle battery 222.
6. If communication continues successfully, then the BAT_DET_A 224 and BAT_DET_B 226 signals from the portable device are monitored by the microprocessor to determine the current flow from the charging power supply to the portable device 202. BAT_DET_A 224 and BAT_DET_A 224 are voltages that are converted to a digital value by the A to D port or equivalent circuitry of the microprocessor. The difference between these two values divided by the resistance of the series resistor R2 228 can be used to determine the current flowing through R2 228.
7. If the calculated current through R2 228 is high then it can be deduced that the portable device 202 is charging. If the calculated current through R2 228 is low then it can be deduced that the portable device 202 battery (not shown)is fully charged. The determination of the specific values for low and high are determined empirically.
   Alternatively, if the device's battery charge status can be reported directly from the portable device 202 through the UART communication lines, then the monitoring of BAT_DET lines need not be monitored.
8. If the system is on, and the device's battery is determined to be charging, then the charging power supply remains on.
9. If the system is on, and the device's battery is determined to be fully charged, then the charging power supply remains on.
   The charging behavior when the key 206 is off or in the accessory position (indicating the vehicle battery is not being charged) is as follows:
10. The IPOD_DET 216 signal is sensed as transitioning from "High" to "Low" or is "Low" which could be used to take the microprocessor out of sleep mode (low current draw mode).
11. The ACC_ID 218 signal is made "High" thereby grounding R3 220.
12. The IPOD_ON 208 signal is made "High" thereby turning on the charging power supply to the portable device 202.
13. Communication between the microprocessor and the portable device 202 continues via the UART_RX and UART_TX connections.
14. If communication fails, then it is suspected that a fault may have occurred. Repetitive testing is made. If communication continues to fail then the charging power supply to the portable device 202 is turned off. This is to prevent potential failure mechanisms and drainage of the main vehicle battery 222.
15. If communication is successful, then BAT_DET_A 224 and BAT_DET_B 226 are monitored as before.
16. If the calculated current through R2 228 is high then it can be deduced that the portable device 202 is charging. If the calculated current through R2 228 is low then it can be deduced that the portable device 202 battery is fully charged. The determination of the specific values for low and high are determined empirically.
17. Alternatively, if the device's battery charge status can be reported from the portable device 202 via the communication lines, then this methodology can be used instead.
18. If the system 200 is off, and the portable device 202 battery is determined to be charging, then the charging power supply remains on.
   a. A timer can be used within the microprocessor to set a "charging period" which when expired will turn off the charging circuitry to prevent the main vehicle battery 222 from being drained. This is a failsafe feature to prevent continuous current drain from the main vehicle battery 222 that would cause the main vehicle battery 222 to be rendered "flat" so that the operator could not start the car.
   b. Upon turning off the charging power supply 224, the microprocessor could be put back into sleep mode. This is also a failsafe feature.
   c. A main vehicle battery 222 condition sensor could be used to ensure that the main vehicle battery 222 voltage does not fall below a certain threshold. When the threshold is crossed, then the charging power supply would be turned off. This is also a failsafe feature.
19. If the system is off, and the device's battery is determined to be fully charged, then the charging power supply is turned off to prevent main vehicle battery 222 drain.
   a. Upon turning off the charging power supply, the microprocessor could be put back into sleep mode.

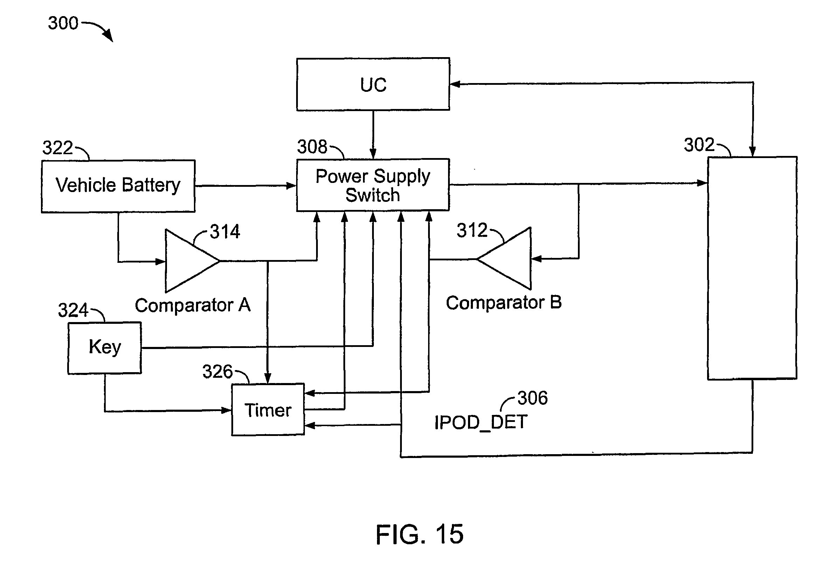

In Fig. 15, an alternative system uses a hardware controlled charging apparatus 300 to charge a portable device 302. In some embodiments, the hardware may be physically located in the portable device case or frame. In other embodiments the hardware may be physically located in system controller.

The normal charging cycle when the key 324 is on (indicating vehicle battery is being charged) is as follows:
1. The IPOD_DET 306 signal line is used as to control the power supply switch 308 that controls the charging power supply to the portable device 302. When IPOD-DET is active (indicating the portable media device is connected), then the power supply switch 308 is closed to allow charging to the portable device 302.
2. Comparator B 312 determines the voltage drop across the series resistor (not shown) between the power supply switch 308 and the portable device 302. The output of comparator B 312 independently controls the power supply switch 308.
3. If the measured voltage exceeds a set threshold, then it can be determined that the portable device 302 battery (not shown) is charging. If the measured voltage does not exceed a set threshold, then it can be determined that the portable device 302 battery is fully charged. These thresholds are determined empirically.
4. If the device's battery is determined to be charging, then Comparator B 312 will enable the charging power supply.
5. If the device's battery is determined to be fully charged, then Comparator B 312 will disable the charging power supply.
6. Comparator A 314 determines whether the main vehicle battery 322 voltage exceeds a set threshold. The output of Comparator A 314 independently controls the power supply switch 308. If the main vehicle battery 322 voltage does exceed the set threshold then the power supply switch 308 is enabled. If not, then the power supply switch 308 is disabled.
7. Key 324 can independently controls the power supply switch 308. When key 324 is ON, the power supply switch 308 is enabled. If OFF, then the power supply switch 308 is disabled.
8. In the hardware implementation, R3 220 is grounded through a transistor switch (not shown) which is controlled by key 324. When key 324 is ON, then R3 220 is grounded, thereby selecting the operating mode desired for the portable device 302.
9. In some examples, IPOD_DET 306, Comparator B 312, Comparator A 314 and KEY 324 must all enable the power supply switch 308 for the switch that turns on the charging to be closed (i.e. enabling changing). This is an AND logic condition. Other logic embodiments exist.
   Normal charging behavior when the key 324 is off or in the accessory position (indicating the vehicle battery is not being charged) is as follows.
10. IPOD_DET 306 is used to control the power supply switch 308 that controls the charging power supply to the portable device 302. When IPOD-DET 306 is active (indicating portable device is attached), then the power supply switch 308 is closed to allow charging to the portable device 302.
11. Comparator B 312 determines the voltage drop across the series resistor (not shown) between the power supply switch 308 and the portable device 302. The output of Comparator B 312 independently controls the power supply switch 308.
12. If the measured voltage exceeds a set threshold, then it can be determined that the portable device 302 battery is charging. If the measured voltage does not exceed a set threshold, then it can be determined that the portable device 302 battery is fully charged. These thresholds are determined empirically.
13. If the device's battery is determined to be charging, then Comparator B 312 will enable the charging power supply.
14. If the device's battery is determined to be fully charged, then Comparator B 312 will disable the charging power supply.
15. Comparator A 314 determines whether the main vehicle battery 322 voltage exceeds a set threshold. The output of Comparator A 314 independently controls the power supply switch 308. If the main vehicle battery 322 voltage does exceed the set threshold then the power supply switch 308 is enabled. If not, then the power supply switch 308 is disabled. This is a failsafe feature.
16. KEY 324 can independently controls the power supply switch 308. When KEY 324 is ON, the power supply switch 308 is enabled. If OFF, then the power supply switch 308 is disabled.
17. In the hardware solution, R3 220 is grounded through a transistor switch which is controlled by KEY 324. When KEY 324 is ON, then R3 220 is grounded, thereby selecting the operating mode desired for the portable device 302.
18. A timer circuit 326 can also be used to keep the power supply switch 308 on upon the removal of known stimuli such as the KEY 324 or Comparator B 312 etc.
19. The timer circuit 326 can also be inserted between the IPOD_DET 306 and the power supply switch 308 so that upon detection of insertion of the portable device 302, then the power supply switch 308 is kept closed (hence charging) for a specific amount of time (determined empirically - how much to charge a battery 322 to a usable amount).
20. The timer circuit 326 can also be inserted between the Comparator B 312 output and the power supply switch 308 to limit the amount of time that charging is active. When the time period has expired, then the timer circuit 326 would shut off the power supply switch 308.
21. The timer circuit 326 can also be inserted between the Comparator A 314 output and the power supply switch 308 to limit the amount of charging time after when a certain main vehicle battery 322 voltage threshold has been reached. When the time period has expired, then the timer circuit 326 would shut off the power supply switch 308.
22. One embodiment is that IPOD_DET 306, Comparator B 312, Comparator A 314 and KEY 324 must all enable the power supply switch 308 for the switch to be closed (i.e. Output is ON). This is an AND logic condition. Other logic embodiments exist. In this case, it will not be possible to charge the iPod or any portable device while the KEY 324 is OFF.
   a. If only the IPOD_DET 306, Comparator B 312 and Comparator A 314 conditions were used to control the power supply switch 308, then it would be possible to charge the portable device 302 while the KEY 324 is OFF.

Various combinations of those methods described in the software and hardware controlled descriptions can be used.

Thus, the charging regimes exhibit a number of useful features including the following:
When the system is transitioned from ON to OFF or when the system is OFF and the portable device 302 is inserted, the communication between the VIC (system controller) and the portable device 302 is used to send a STOP and POWER OFF command to the portable device 302. This is to overcome the shortcomings that some iPods (or any portable device) may have because they do not support a unique POWER OFF command. By sending a unique STOP command, these devices may enter a sleep mode (low current draw mode) after a timed period automatically providing that the portable device 302 is in STOP mode. This is a failsafe invention to prevent continuous current drain from the main vehicle battery 322 that would cause the main vehicle battery 322 to be rendered "flat" so that the operator could not start the car. Some iPods (or any portable device) automatically enter PLAY mode when they are being charged and therefore a specific STOP command must be sent after charging has begun to cancel this auto-PLAY feature).

The device's battery level can be read from the portable device 302 to determine whether to charge or not.

Actual charging current is measured to infer device's battery state (uncharged, partially charged, fully charged etc). This is used to determine whether to charge or not. This is particularly useful when the portable device 302 device cannot supply device's battery level / status information.

Grounding pin / mechanical switch is used to determine physical insertion of the portable device 302 into the vehicle side receptacle connector.

The status of the key 324 state is used to determine whether to charge or not.

Main vehicle battery 322 status is used to determine whether to charge or not (and when to stop charging).

A timer circuit 326 is used to create a charging time window.

If communication between the micro-controller and the portable device 302 is not successful upon system on or insertion of the portable device 302, then the power supply switch 308 can be disabled to prevent charging.

The operating mode of the portable device 302 is selected through an external pull-down resistor that is controlled by the main system.

All the above methods can be used in multiple logic combinations such as AND, OR etc.

Other embodiments are within the scope of the following claims. For example, the gobbler unit does not have to enclose the portable device completely to accomplish the connection of the portable device to the vehicle media system.

## Claims

1. An apparatus comprising:
a frame (101) configured to receive a portable media player (30), the frame (101) comprising:
connection elements (102) configured to provide electrical connection between the portable media player (30) and a vehicle media system when the portable media player is received in the frame (100), and
a guide to align the portable media player with the connection elements (102) when the portable media player (30) is being received in the frame (101), **characterised in that**
at least one user control of the portable media player is inaccessible to the user when the portable media player (30) is received in the frame (101), and
the frame (101) is configured to receive a cup (100) in which the portable media player (30) is held in use.

2. The apparatus of claim 1, in which the frame (101) comprises a cup holder 10 of the vehicle.

3. The apparatus of claim 1, also including a cup in which the portable media player is held.

4. The apparatus of claim 3, in which the connection elements (102) include connectors on the cup.

5. The apparatus of claim 4, in which the connectors are selectively hidden or withdrawn from a bottom surface of the cup.

6. The apparatus of claim 5, in which the connectors may be selectively hidden or withdrawn by twisting one portion of the cup relative to another portion of the cup.

7. The apparatus of claim 3, in which the cup includes an interior space configured to receive the portable media player and a coupler to provide electrical connection between the player and the vehicle media system.

8. The apparatus of any of claims 1 to 7" in which the cup is sized to be supported in a cup holder of a vehicle.

## Patentansprüche

1. Vorrichtung, umfassend:
einen Rahmen (101), der konfiguriert ist, einen tragbaren Media Player (30) aufzunehmen, wobei der Rahmen (101) umfasst:
Anschlusselemente (102), die konfiguriert sind, elektrische Verbindung zwischen dem tragbaren Media Player (30) und einem Fahrzeug-Mediasystem bereitzustellen, wenn der tragbare Media Player im Rahmen (101) aufgenommen wird; und
eine Führung zum Ausrichten des tragbaren Media Players mit den Anschlusselementen (102), wenn der tragbare Media Player (30) im Rahmen (101) aufgenommen wird, **dadurch gekennzeichnet, dass**
zumindest ein Benutzerbedienelement des tragbaren Media Players dem Benutzer unzugänglich ist, wenn der tragbare Media Player (30) im Rahmen (101) aufgenommen wird; und
der Rahmen (101) konfiguriert ist einen Becher (100) aufzunehmen, wobei der tragbare Media Player (30) im Gebrauch gehalten wird.

2. Vorrichtung nach Anspruch 1, wobei der Rahmen (101) einen Becherhalter 10 des Fahrzeugs umfasst.

3. Vorrichtung nach Anspruch 1, die außerdem einen Becher einschließt, in dem der tragbare Media Player gehalten wird.

4. Vorrichtung nach Anspruch 3, wobei die Anschlusselemente (102) Verbinder am Becher einschließen.

5. Vorrichtung nach Anspruch 4, wobei die Verbinder selektiv versteckt oder aus einer unteren Fläche des Bechers herausgezogen werden.

6. Vorrichtung nach Anspruch 5, wobei die Verbinder durch Drehen eines Teils des Bechers relativ zu einem anderen Teil des Bechers selektiv versteckt oder herausgezogen werden können.

7. Vorrichtung nach Anspruch 3, wobei der Becher einen Innenraum einschließt, der konfiguriert ist, den tragbaren Media Player und einen Koppler aufzunehmen, um elektrische Verbindung zwischen dem Player und dem Mediasystem des Fahrzeugs bereitzustellen.

8. Vorrichtung nach einem beliebigen der Ansprüche 1 to 7, wobei der Becher bemessen ist, ein einem Becherhalter eines Fahrzeugs getragen zu werden.

## Revendications

1. Appareil comprenant :
un cadre (101) configuré pour recevoir un lecteur multimédia portable (30), le cadre (101) comprenant :
des éléments de connexion (102) configurés pour procurer une connexion électrique entre le lecteur multimédia portable (30) et un système média de véhicule lorsque le lecteur multimédia portable est reçu dans le cadre (101) ; et
un guide pour aligner le lecteur multimédia portable avec les éléments de connexion (102) lorsque le lecteur multimédia portable (30) est reçu dans le cadre (101), **caractérisé en ce que**
au moins une commande utilisateur du lecteur multimédia portable est inaccessible à l'utilisateur lorsque le lecteur multimédia portable (30) est reçu dans le cadre (101), et
le cadre (101) est configuré pour recevoir un gobelet (100) dans lequel le lecteur multimédia portable (30) est maintenu en cours d'utilisation.

2. Appareil de la revendication 1, dans lequel le cadre (101) comprend un porte-gobelet (10) du véhicule.

3. Appareil de la revendication 1, comprenant également un gobelet dans lequel le lecteur multimédia portable est maintenu.

4. Appareil de la revendication 3, dans lequel les éléments de connexion (102) sont constitués par des connecteurs sur le gobelet.

5. Appareil selon la revendication 4, dans lequel les connecteurs sont sélectivement cachés ou retirés d'une surface de fond du gobelet.

6. Appareil selon la revendication 5, dans lequel les connecteurs peuvent être sélectivement cachés ou retirés en imprimant une torsion à une partie du gobelet relativement à une autre partie du gobelet.

7. Appareil selon la revendication 3, dans lequel le gobelet comprend un espace intérieur configuré pour recevoir le lecteur multimédia portable et une fiche de connexion de manière à procurer une connexion électrique entre le lecteur et le système média du véhicule.

8. Appareil selon l'une quelconque des revendications 1 à 7, dans lequel le gobelet est dimensionné de manière à être supporté dans un porte-gobelet d'un véhicule.
